# EUROPEAN PATENT SPECIFICATION

(11) **EP 1 662 382 B1**
(45) Date of publication and mention of the grant of the patent: **21.04.2010**
(21) Application number: 05257240.1
(22) Date of filing: 24.11.2005
(51) Int. Cl.: G06F 9/44

(54) **Method for constructing user interface**
Verfahren zur Konstruktion einer Benutzeroberfläche
Procédé pour la constrution d'une interface d'utilisateur

(30) Priority: 26.11.2004 JP 2004342249
(43) Date of publication of application: 31.05.2006
(73) Proprietor: CANON KABUSHIKI KAISHA, Ohta-ku Tokyo (JP)
(72) Inventor: Omi, Hiromi, Ohta-ku, Tokyo (JP); Yamada, Masayuki, Ohta-ku, Tokyo (JP); Hirota, Makoto, Ohta-ku, Tokyo (JP)
(74) Representative: Hitching, Peter Matthew

(56) References cited:
- EP-A2- 0 833 243
- WO-A-98/45770
- WO-A-03/052370
- US-A- 5 386 564
- US-A- 5 864 819
- US-A1- 2003 023 639

## Description

### Field of the Invention

The present invention relates to a method for constructing a multimodal user interface (multimodal UI).

### Description of the Related Art

A multimodal UI enables a user to input information through a modality desired by the user among a plurality of modalities, such as GUI input and speech input, and thus is very convenient for the user. Therefore, a tool for easily constructing such a multimodal UI has been demanded. Particularly, when a UI compatible with both GUI input and speech input is constructed, redundant operations are likely to be often performed, e.g., the same operation is performed on each of a GUI and a speech UI. For example, assume that an author constructs a UI in which a pull-down menu having items "A", "B", and "C" is placed on a screen and these items "A", "B", and "C" can also be input in speech. In this case, the author generates a pull-down menu having items "A", "B", and "C" and binds an input result to a result storage area. Also, the author generates a speech recognition grammar to input the items "A", "B", and "C" in speech so as to generate a speech input component and binds an input result to a result storage area. In this way, the author has to repeat a similar operation on the items "A", "B", and "C". Under these circumstances, a technique for reducing the redundant operations and easily constructing a multimodal UI is required.

Regarding construction of a UI, a method for easily designing a UI by using a GUI operation has been disclosed (e.g., Japanese Patent Laid-Open Nos. 09-114623 and 09-062469). However, these known techniques do not take modality into consideration.

On the other hand, Japanese Patent Laid-Open No. 2003-167598 discloses a technique for realizing a multimodal UI without constructing a speech UI by interpreting the logic of a GUI. In this known technique, however, operation as a multimodal UI depends on the interpreting technique, and thus a multimodal UI desired by the author cannot always be realized.

EP0833243 discloses a GUI editing aiding apparatus for editing a display screen that a computer application program provides. US5386564 discloses a computer implemented method within an object management facility. US5864819 discloses a method for representing a target software application program to a voice recognition navigator program on a computer system.

### SUMMARY OF THE INVENTION

The present invention has been made in view of these circumstances and is directed to easily constructing a multimodal UI. In particular, the present invention is directed to simplifying redundant operations performed by an author when the author constructs a UI compatible with both GUI input and speech input.

According to an aspect of the present invention, a method for constructing a user interface includes: a selecting step of selecting one or a plurality of first components, a receiving step of receiving instructions to convert the first component into a second component, the type of the second component being different from the type of the first component, a converting step of converting the data corresponding to the first component into the data corresponding to the second component, and a display controlling step of controlling displaying the second component to which the data converted in the converting step is related.

According to an aspect of the present invention, an apparatus for constructing a user interface includes: selecting means for selecting one or a plurality of first components, receiving means for receiving instructions to convert the first component into a second component, the type of the second component being different from the type of the first component, converting means for converting the data corresponding to the first component into the data corresponding to the second component, and display controlling means for controlling displaying the second component to which the data converted by the converting means is related.

Further features of the present invention will become apparent from the following description of exemplary embodiments with reference to the attached drawings.

### BRIEF DESCRIPTION OF THE DRAWINGS

Fig. 1 is a block diagram showing the module configuration of a method for constructing a multimodal UI according to a first embodiment of the present invention.

Fig. 2 illustrates an example in which a component is not converted in the method according to the first embodiment.

Fig. 3 illustrates an example of the method according to the first embodiment.

Fig. 4 illustrates an example of a method for constructing a multimodal UI according to a second embodiment of the present invention.

Fig. 5 illustrates another example of the method according to the second embodiment.

Fig. 6 illustrates another example of the method according to the second embodiment.

Fig. 7 illustrates another example of the method according to the second embodiment.

Fig. 8 illustrates another example of the method according to the second embodiment.

Fig. 9 illustrates another example of the method according to the second embodiment.

Fig. 10 illustrates another example of the method according to the second embodiment.

Fig. 11 illustrates an example in which a data model is set in the method according to the second embodiment.

Fig. 12 illustrates an example in which an item is added to a component in a method for constructing a multimodal UI according to a third embodiment of the present invention.

Fig. 13 illustrates an example in which a synonym list is used in a method for constructing a multimodal UI according to a fourth embodiment of the present invention.

Fig. 14 illustrates another example in which a synonym list is used in the method according to the fourth embodiment.

Fig. 15 is a flowchart illustrating the method for constructing a multimodal UI according to the first embodiment.

Fig. 16 is a flowchart illustrating the method for constructing a multimodal UI according to the second embodiment.

Fig. 17 is a flowchart illustrating a converting process in the method according to the first embodiment.

Fig. 18 includes tables defining the correspondence between components before conversion and components after conversion in the method according to the second embodiment.

### DESCRIPTION OF THE EMBODIMENTS

Hereinafter, a method for constructing a multimodal user interface (UI) according to embodiments of the present invention is described with reference to the attached drawings.

### <First Embodiment>

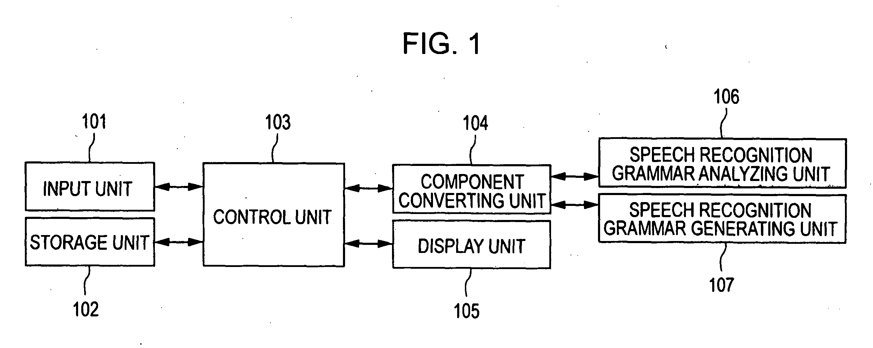

Fig. 1 is a block diagram showing a module configuration of a method for constructing a multimodal UI according to a first embodiment. In Fig. 1, the module configuration includes an input unit 101, a storage unit 102, a control unit 103, a component converting unit 104, a display unit 105, a speech recognition grammar analyzing unit 106, and a speech recognition grammar generating unit 107.

The input unit 101 includes an input device, such as buttons, a keyboard, a mouse, a touch panel, a pen, or a tablet, and functions such as an input interface to input various instructions to the apparatus.

The storage unit 102 includes a hard disk drive to store various information and a storage medium, such as a compact disk read only memory (CD-ROM) or a digital versatile disk read only memory (DVD-ROM), to provide various information to an information processing system. Further, the hard disk drive and the storage medium store various application programs, user interface control programs, and various data required to execute the respective programs. These programs and data are read into this system under control by the control unit 103 in the subsequent stage.

The control unit 103 includes a work memory, a central processing unit (CPU), or a microprocessing unit (MPU), and executes various processes by reading programs and data stored in the storage unit 102.

The component converting unit 104 converts an input/output component under control by the control unit 103.

The display unit 105 includes a display device, such as a liquid crystal display, and displays various information composed of images and characters. A touch panel display device can also be used as the display unit 105. In that case, the display unit 105 has the function of a GUI input unit (a function of inputting various instructions to the system).

The speech recognition grammar analyzing unit 106 analyzes a speech recognition grammar and extracts a recognition vocabulary. The speech recognition grammar generating unit 107 generates a speech recognition grammar to recognize a given vocabulary.

In the following description, an authoring tool for constructing a multimodal UI is described as an example.

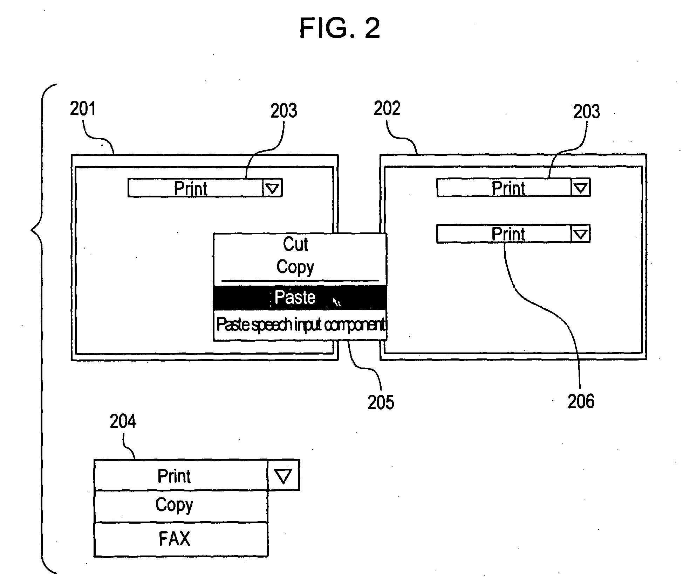

Referring to Fig. 2, a multimodal UI is edited in an editing screen 201. A component 203 placed on the editing screen 201 is a pull-down component having items "Print", "Copy", and "FAX", as denoted by reference numeral 204.

By selecting and copying the component 203 and pasting it on the editing screen ("Paste" is selected from a right click menu 205), an editing screen 202 is obtained. In this case, a pull-down component 206 having the same items (204) as those of the component 203 is placed, as in a known authoring tool.

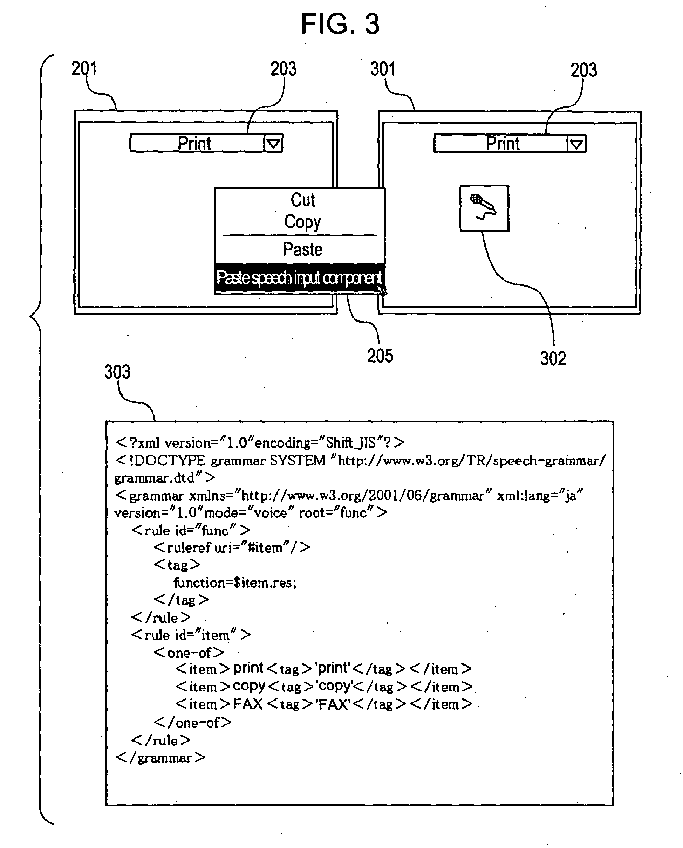

On the other hand, as shown in Fig. 3, if the component 203 is selected, copied, and pasted in the form of a speech input component ("Paste speech input component" is selected from the right click menu 205), an editing screen 301 is obtained. In this case, a speech input component 302 having the items of the component 203 as its recognition vocabulary is placed on the screen, unlike in the known authoring tool. At this time, a speech recognition grammar 303 of the speech input component 302 is generated. This speech recognition grammar 303 accepts speeches "print", "copy", and "FAX". In this manner, the data corresponding to the component 203 is converted into the data corresponding to the speech input component 302. The speech recognition grammar 303 is described based on a specification SRGS of W3C (World Wide Web Consortium) (http://www.w3.org/TR/speech-grammar/). However, the describing method is not limited to the SRGS.

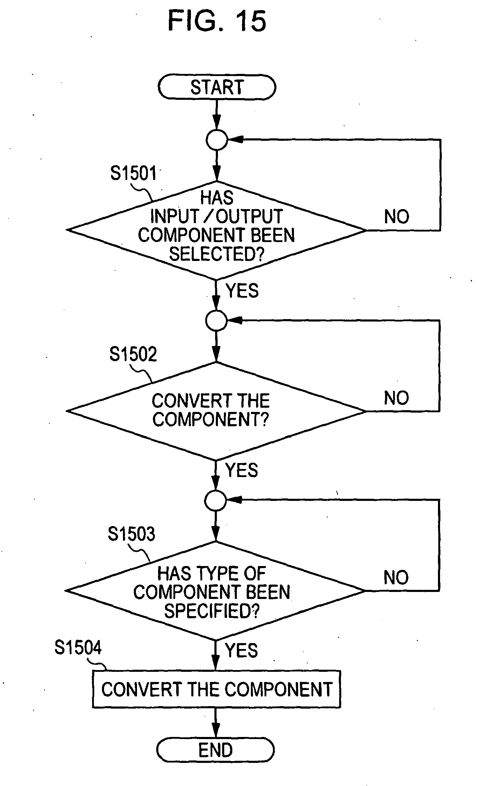

Hereinafter, a method for converting an input/output component to a different type of input/output component (the example shown in Fig. 3) is described with reference to the flowchart shown in Fig. 15. Program for running this flowchart is stored in the storage unit 102 and is executed by the control unit 103.

In Fig. 15, no input/output component has been selected in step S1501. After an input/output component has been selected (YES in step S1501), the process waits until instructions to convert the type of the component are provided (step S1502). When "Paste" is selected as in Fig. 2, the type of the component is not converted. Therefore, a component of the same type is pasted as in the known art.

On the other hand, when the type of the component is different before and after conversion as in Fig. 3, instructions to convert the type of the component are provided. After instructions to convert the type of the component have been provided (YES in step S1502), the process waits until the type of the component after conversion is specified (step S1503).

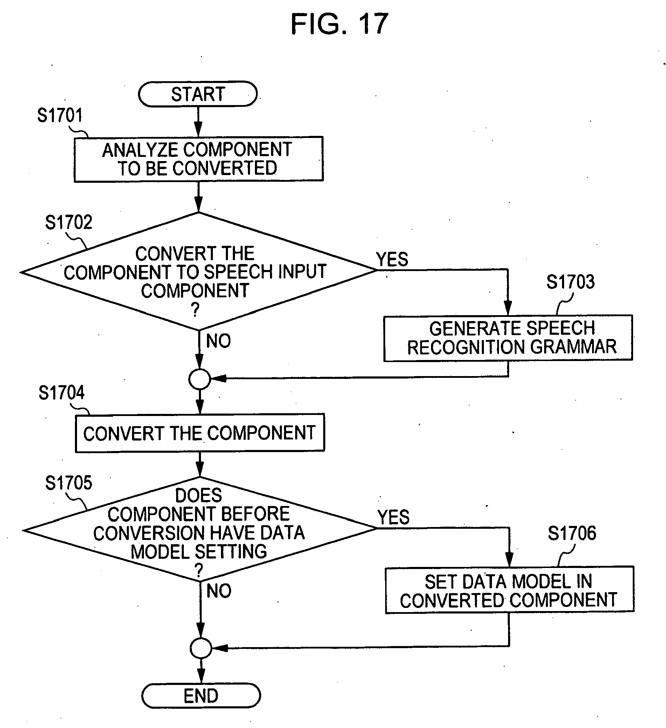

After the type of the component has been specified (YES in step S1503), the component converting unit 104 converts the component (step S1504). The process of converting a component performed by the component converting unit 104 is described below with reference to the flowchart shown in Fig. 17. Program for running this flowchart is stored in the storage unit 102 and is executed by the control unit 103.

First, a component to be converted is analyzed in step S1701. For example, when the component is a pull-down component denoted by reference numeral 204 in Fig. 2, items "Print", "Copy", and "FAX" are extracted. When the component to be converted is a speech input component, the speech recognition grammar analyzing unit 106 extracts a list of recognition results (interpretation results) that can be output by using the speech recognition grammar of the speech input component. The list of recognition results is extracted by analyzing the speech recognition grammar based on the specification of the speech recognition grammar. The speech recognition grammar is analyzed by using a known technique. In the example of the speech recognition grammar 303 shown in Fig. 3, "print", "copy", and "FAX" are extracted. When there are plural components to be converted, the extraction is performed on every component. When two or more same items are extracted, those items are combined into one.

When the component is to be converted to a speech input component (YES in step S1702), the speech recognition grammar generating unit 107 generates a speech recognition grammar (step S1703). The speech recognition grammar can be generated by using a known technique after a recognition vocabulary has been specified. Herein, the speech recognition grammar is generated by using the items extracted in step S1701 as a recognition vocabulary.

Then, the component is converted (step S1704). For example, when the component is to be converted to a pull-down component, a pull-down component having the items extracted in step S1701 (in the above example, "Print", "Copy", and "FAX") is generated. When the component is to be converted to a speech input component, the speech recognition grammar generated in step S1703 is used.

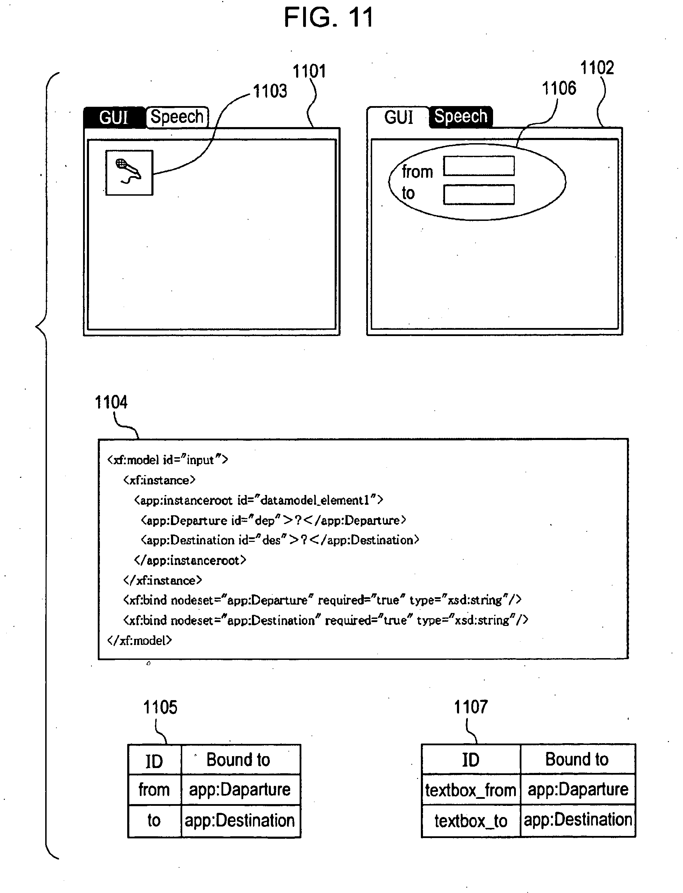

When the component before conversion has data model setting (YES in step S1705), the data model is set in the converted component (step S1706). More specifically, the data model set in the items before conversion is set in the corresponding items after conversion (a specific example is described in the following second embodiment by using Fig. 11).

In the above-described example shown in Fig. 3, a component is copied and pasted. Alternatively, the component can be cut and pasted or can be dragged and dropped on another screen. Further, "Conversion" can be selected from the menu.

If information of the component before conversion is updated after conversion, whether information of the component after conversion should be updated can be asked of the author.

As described above, according to the first embodiment, the author can move or copy an existing component regardless of the type of the component. Accordingly, redundant operations can be reduced.

### <Second Embodiment>

A method for constructing a multimodal UI according to a second embodiment of the present invention is described. In this embodiment, a case where the modality of a component after conversion is specified is described. In the following description, an authoring tool for constructing a multimodal UI is used as an example.

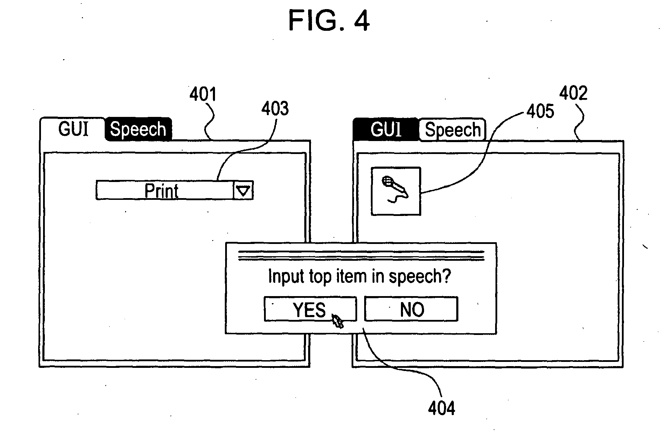

Referring to Fig. 4, a multimodal UI is edited in an editing screen 401. The editing screen 401 has a GUI editing screen for editing a GUI component and a speech UI editing screen for editing a speech component. A component 403 placed on the GUI editing screen of the editing screen 401 is a pull-down component and has items "Print", "Copy", and "FAX" as denoted by reference numeral 204 in Fig. 2.

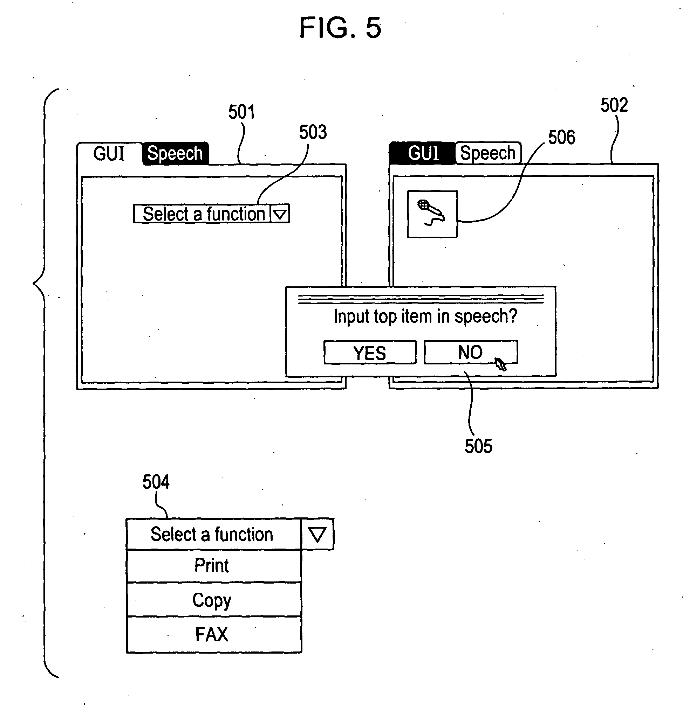

By selecting and copying the component 403 and pasting it on the speech UI editing screen, an editing screen 402 is obtained. In this case, a speech input component 405 having the items of the component 403 as its recognition vocabulary is placed on the speech UI editing screen of the editing screen 402. The pull-down menu can include only options as in the menu 204 shown in Fig. 2. Alternatively, the pull-down menu can include an item other than options, e.g., "Select a function" at the top, as in a menu 504 shown in Fig. 5. The top item "Select a function" is not an option and thus is not input in speech. Whether the top item should be input in speech can be asked of the author. In the example shown in Fig. 4, whether the top item "Print" should be input in speech is asked of the author (404). When "YES" is selected, the item "Print" is included in the recognition vocabulary. A speech recognition grammar of the speech input component 405 generated at this time is the same as the speech recognition grammar 303 shown in Fig. 3 and accepts speeches "print", "copy", and "FAX".

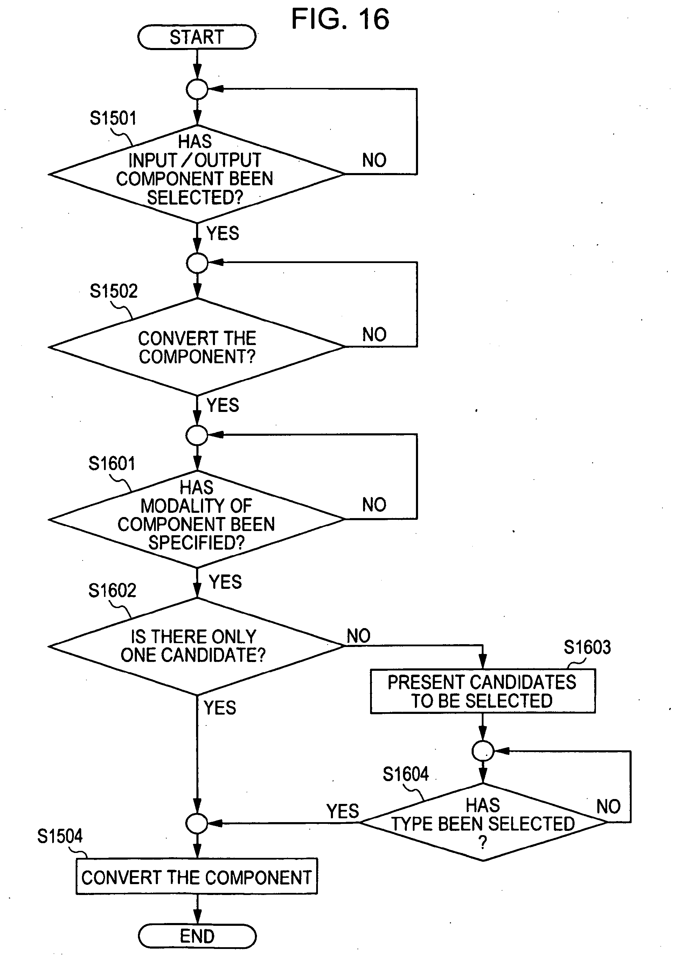

Hereinafter, a conversion method used when the modality of a component after conversion is specified (the example shown in Fig. 4) is described with reference to the flowchart shown in Fig. 16. Program for running this flowchart is stored in the storage unit 102 and is executed by the control unit 103. In Fig. 16, steps S1501, S1502, and S1504 are the same as those in Fig. 15.

After instructions to convert an input/output component have been provided (YES in step S1501 and YES in step S1502), the process waits until the modality of a component after conversion is specified (step S1601). In the example shown in Fig. 4, the component 403 is copied and pasted on the speech UI editing screen. Accordingly, it can be understood that the modality of the component after conversion is speech.

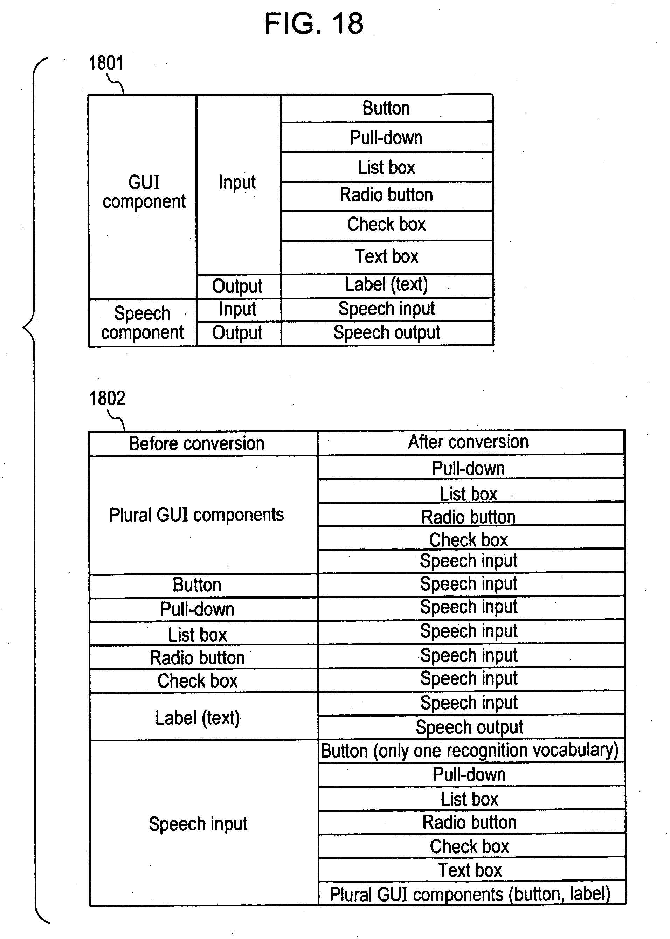

After the modality of the component after conversion has been specified (YES in step S1601), candidate types of the component after conversion are listed. As shown in Fig. 18, input/output components (table 1801) and candidates of input/output components after conversion corresponding to components before conversion (table 1802) are defined in advance in the storage unit 102. Then, the candidate types are listed by referring to the table 1802. When there is only one candidate type (YES in step S1602), the component is converted in the same manner as in the first embodiment (step S1504). In the example shown in Fig. 4, the table 1802 shown in Fig. 18 indicates that the candidate type after conversion corresponding to a pull-down component before conversion is only one, that is, a speech input component. Therefore, the component is converted to a speech input component. At this time, whether the top item "Print" should be input in speech can be asked of the author (404 in Fig. 4). On the other hand, when there are a plurality of candidates (NO in step S1602), the candidates are presented so that the author can select one of them (step S1603). After the author has selected the type (YES in step S1604), the component is converted in the same manner as in the first embodiment (step S1504).

Another operation example according to this embodiment is described next. Fig. 5 shows an example in which the top item is not included in a recognition vocabulary when a pull-down component is converted.

Referring to Fig. 5, a multimodal UI is edited in an editing screen 501 as in the editing screen 401 shown in Fig. 4. A component 503 placed on a GUI editing screen of the editing screen 501 is a pull-down component and has items "Select a function", "Print", "Copy", and "FAX" as shown in a menu 504. By selecting and copying the component 503 and pasting it on a speech UI editing screen, an editing screen 502 is obtained. Since the component is pasted on the speech UI editing screen, the modality of the converted component is speech (YES in step S1601). According to the table 1802 shown in Fig. 18, a component after conversion is determined to be a speech input component (YES in step S1602), and thus a speech input component 506 having the items of the component 503 as its recognition vocabulary is placed on the speech UI editing screen of the editing screen 502. In this example, however, when "NO" is selected in a question 505: whether the top item ("Select a function") should be input in speech, the item "Select a function" is not included in the recognition vocabulary. A speech recognition grammar of the speech input component 506 generated at this time is the same as the speech recognition grammar 303 shown in Fig. 3 and accepts speeches "print", "copy", and "FAX".

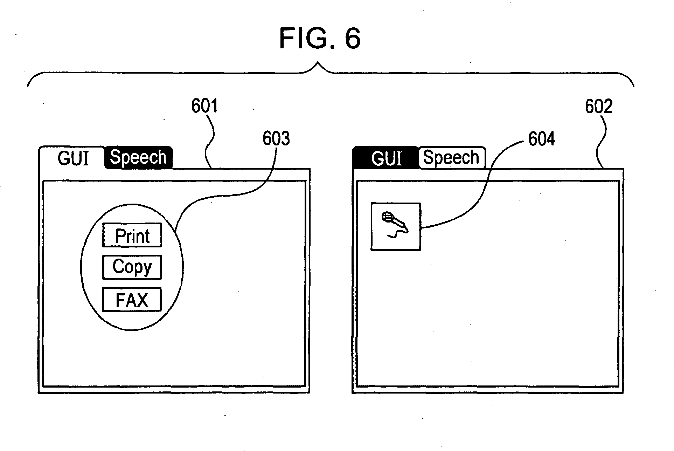

Fig. 6 shows an example in which a plurality of components are converted. In Fig. 6, buttons "Print", "Copy", and "FAX" are placed on a GUI editing screen of an editing screen 601. By selecting and copying these three components (603) and pasting them on a speech UI editing screen, an editing screen 602 is obtained. Since the components are pasted on the speech UI editing screen, the modality of the components after conversion is speech (YES in step S1601). According to the table 1802 shown in Fig. 18, the component after conversion is determined to be a speech input component (YES in step S1602), and thus a speech input component 604 having the items of the three components (603) as its recognition vocabulary is placed on the speech UI editing screen. A speech recognition grammar of the speech input component 604 generated at this time is the same as the speech input grammar 303 shown in Fig. 3 and accepts speeches "print", "copy", and "FAX".

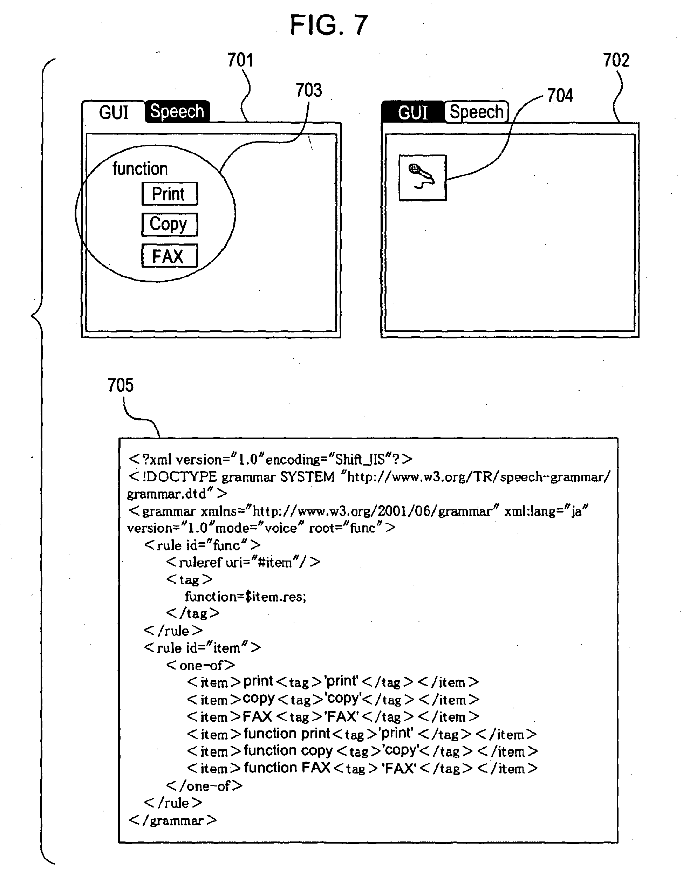

Fig. 7 shows another example of converting a plurality of components. In Fig. 7, a label (text) "function" and buttons "Print", "Copy", and "FAX" are placed on a GUI editing screen of an editing screen 701. By selecting and copying these four components (703) and pasting them on a speech UI editing screen, an editing screen 702 is obtained. Since the components are pasted on the speech UI editing screen, the modality of the component after conversion is speech (YES in step S1601). According to the table 1802 shown in Fig. 18, the component after conversion is determined to be a speech input component (YES in step S1602), and thus a speech input component 704 having the items of the four components (703) as its recognition vocabulary is placed on the speech UI editing screen. A speech recognition grammar of the speech input component 704 generated at this time can accept speeches "function", "print", "copy", and "FAX". Alternatively, a method for extracting a recognition vocabulary can vary depending on the type of component. For example, an item extracted from a label can be added at the top of a vocabulary extracted from another component. When such extraction is performed, speeches "print", "copy", "FAX", "function print", "function copy", and "function FAX" are accepted as shown in the speech recognition grammar 705.

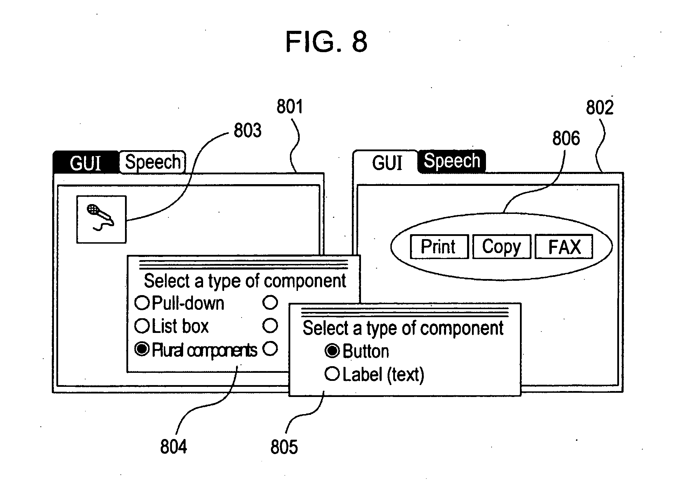

Fig. 8 shows an example in which a component after conversion has a plurality of candidate types. In Fig. 8, a speech input component 803 having the speech recognition grammar 303 shown in Fig. 3 is placed on a speech UI editing screen of an editing screen 801. By selecting and copying the component 803 and pasting it on a GUI editing screen, an editing screen 802 is obtained. Since the component is pasted on the GUI editing screen, the modality of the component after conversion is GUI (YES in step S1601). According to the table 1802 shown in Fig. 18, candidate types of the component after conversion are pull-down, list box, radio button, check box, text box, and plural GUI components (button, label). Therefore, candidate types of the component are presented as shown in lists 804 and 805 (S1603). In this example, "Button" is selected (YES in step S1604), so that three buttons (806) corresponding to the recognition vocabulary of the speech input component 803 "Print", "Copy", and "FAX" are placed on the GUI editing screen of the editing screen 802. The recognition vocabulary is listed up by analyzing the speech recognition grammar using a known technique, as described above.

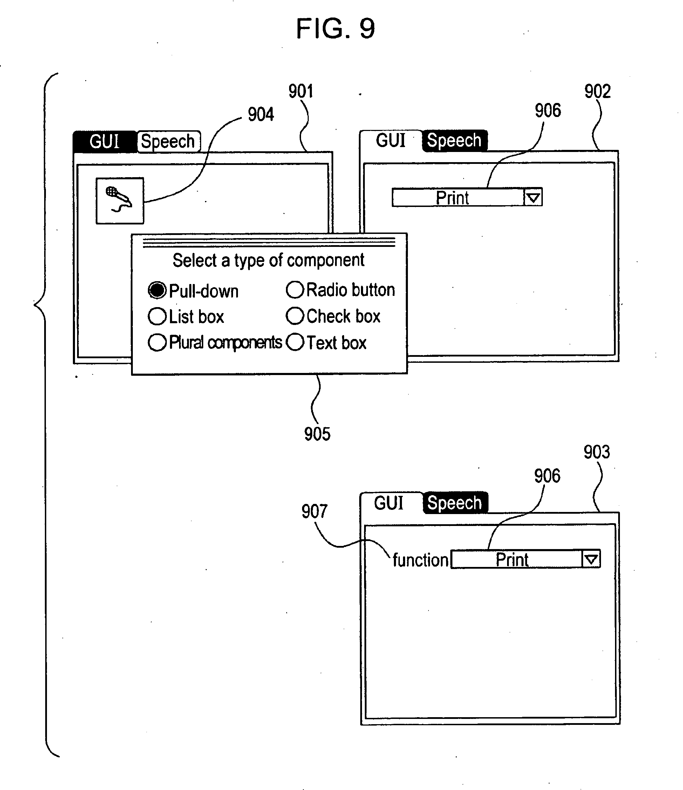

Fig. 9 shows another example in which a component after conversion has a plurality of candidate types. In Fig. 9, a speech input component 904 having the speech recognition grammar 303 shown in Fig. 3 is placed on a speech UI editing screen of an editing screen 901. By selecting and copying the component 904 and pasting it on a GUI editing screen, an editing screen 902 is obtained. As in the above-described example, a pull-down component 906 having the recognition vocabulary of the speech input component 904 as its items is placed on the GUI editing screen 902. Herein, when the recognition vocabulary is listed up, an interpretation name of interpreting the recognition vocabulary can be output in the form of a label (text). For example, in the speech recognition grammar 303 shown in Fig. 3, results "print", "copy", and "FAX" are output with an interpretation name "function". A screen 903 is an example in which the interpretation name "function" (907) is output as a label.

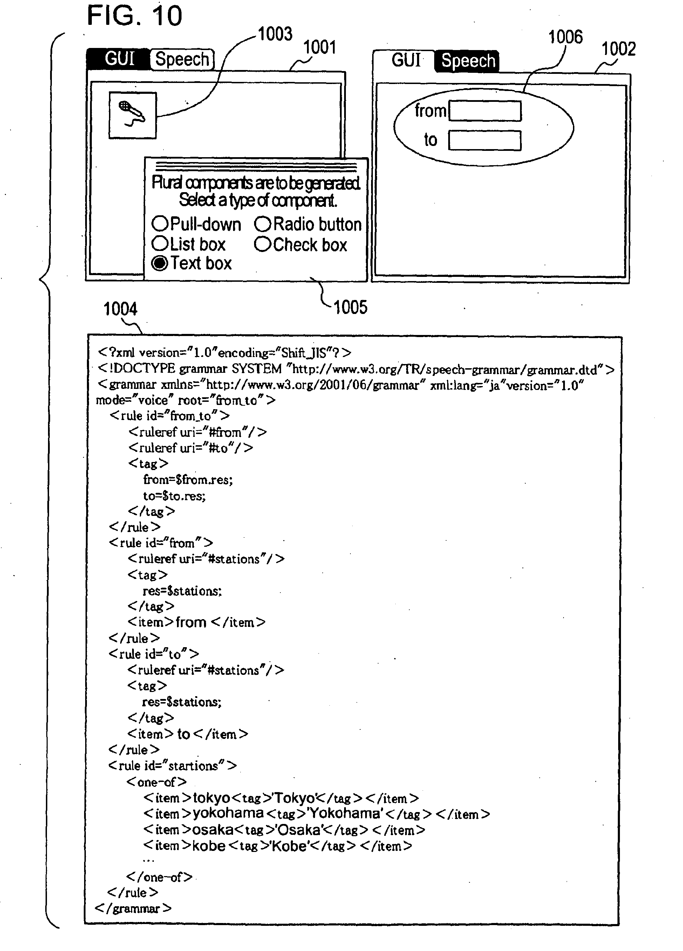

Fig. 10 shows another example in which a component after conversion has a plurality of candidate types. In Fig. 10, a speech input component 1003 having a speech recognition grammar 1004 is placed on a speech UI editing screen of an editing screen 1001. By selecting and copying the component 1003 and pasting it on a GUI editing screen, an editing screen 1002 is obtained. Since the component is pasted on the GUI editing screen, the modality of the component after conversion is GUI (YES in step S1601). According to the table 1802 shown in Fig. 18, candidate types of the component after conversion are pull-down, list box, radio button, check box, text box, and plural GUI components (button, label). Therefore, the candidate types of the component are presented in a list 1005 (step S1603). In this example, a text box is selected (step S1604), and thus labels and text boxes (1006) corresponding to the recognition vocabulary of the speech input component 1003 are placed on the GUI editing screen 1002. Herein, the speech recognition grammar 1004 accepts a speech "from any of Tokyo, Yokohama, Osaka, and Kobe to any of Tokyo, Yokohama, Osaka, and Kobe". At this time, the vocabulary after "from", that is, "any of Tokyo, Yokohama, Osaka, and Kobe" is associated with an interpretation name "from". Likewise, the vocabulary after "to", that is, "any of Tokyo, Yokohama, Osaka, and Kobe" is associated with an interpretation name "to". These interpretation names are output as interpretation results. In this way, since two interpretation results (from and to) are output, two text boxes are placed. The labels on the left of the text boxes indicate the interpretation names, as in the example shown in Fig. 10.

Fig. 11 shows an example in which a component to be converted has bind setting to a data model. The example shown in Fig. 11 is basically the same as that shown in Fig. 10 but is different in that the speech input component 1103 has a bind setting 1105 to a data model 1104. The data model is a definition of data that should be obtained from a user through a UI. In the data model 1104, two pieces of character string data are defined by an <app: Departure> tag indicating a departure place and an <app: Destination> tag indicating a destination.

The bind setting is a definition: which value is bound to which data model. In the bind setting 1105, the value ID=from (the value interpreted as an interpretation name "from") is bound to data defined by the above-described <app: Departure> tag. Also, the value ID=to (the value interpreted as an interpretation name "to") is bound to data defined by the above-described <app: Destination> tag. For example, assume that a speech "from Tokyo to Yokohama" is input and that interpretation results "from=Tokyo" and "to=Yokohama" are output by speech recognition. In this case, "Tokyo" is set to a data model defined by the <app: Departure> tag and "Yokohama" is set to a data model defined by the <app: Destination> tag.

As described above with reference to Fig. 11, by selecting and copying the speech input component 1103 and pasting it on the GUI editing screen, text boxes and labels 1106 are placed. In other words, labels "from" and "to", a text box corresponding to the interpretation result "from" (ID=texbox_from is set at conversion), and a text box corresponding to the interpretation result "to" (ID=texbox_to is set at conversion) are placed.

Accordingly, since the interpretation result "from" is bound to the data model, the process proceeds from step S1705 (YES) to S1706 when the component is converted (see Fig. 17). Then, the corresponding text box (ID=texbox_from) is bound to <app: Departure> (step S1706). Likewise, in the interpretation result "to", the corresponding text box (ID=texbox_to) is bound to <app: Destination> (step S1706). Accordingly, a bind setting 1107 is obtained.

As described above, according to the second embodiment, the author can move or copy an existing component regardless of the type of the component, as in the first embodiment. Accordingly, redundant operations can be reduced.

### <Third Embodiment>

A method for constructing a multimodal UI according to a third embodiment of the present invention is described. In this embodiment, conversion is performed while instructions to add an input/output component to another input/output component are provided. Hereinafter, an authoring tool for constructing a multimodal UI is used as an example.

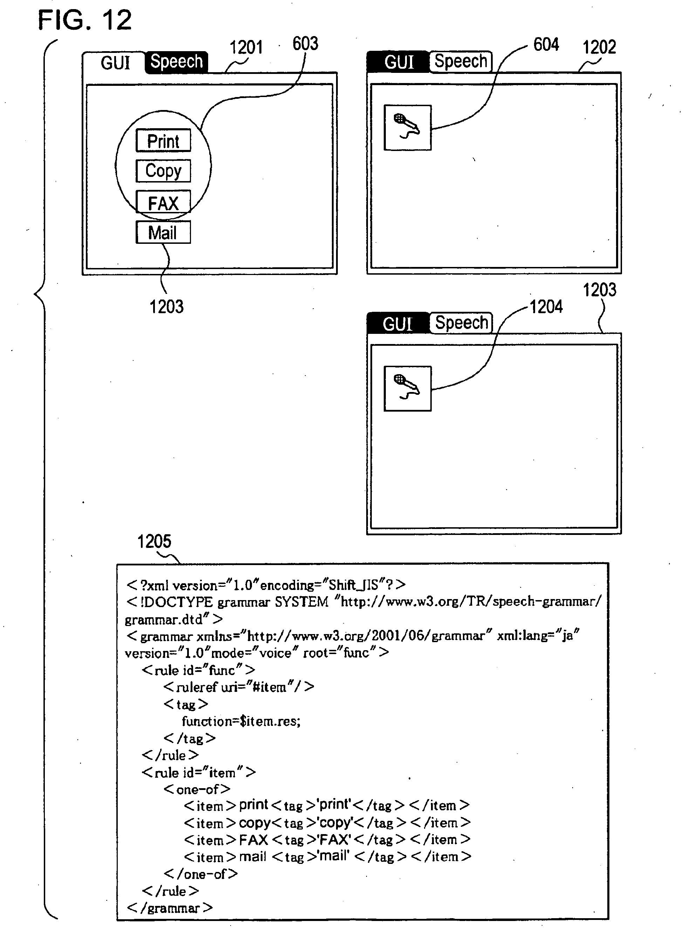

Referring to Fig. 12, buttons "Print", "Copy", and "FAX" (603) are placed on a GUI editing screen 1201. On the other hand, a speech input component 604 generated by selecting, copying, and pasting the three components (603) is placed on a speech UI editing screen 1202 (also see Fig. 6 in the second embodiment).

Under this condition, if a button "Mail" 1203 is newly generated on the GUI editing screen 1201 and is dragged and dropped onto the speech input component 604 on the speech input screen 1202, the following process is performed.

Since the button 1203 indicates "Mail" (step S1701), a recognition vocabulary "mail" is added to the speech recognition grammar 303 of the speech input component 604 generated by conversion, so that a speech recognition grammar 1205 is generated (YES in step S1702 and proceeds to step S1703). Accordingly, the speech recognition grammar 1205 accepts speeches "print", "copy", "FAX", and "mail".

Then, in step S1704, the speech recognition grammar of the speech input component is changed to the speech recognition grammar 1205. When the button 1203 has a data model setting (YES in step S1705), setting is performed as described above in the second embodiment (step S1706).

In the above-described example, the modality of the added component is different from that of the existing component. However, both modalities can be the same, e.g., an item of a button can be added to an item of a pull-down component.

As described above, according to the third embodiment, the author can add an item of a component by using an existing component. Accordingly, redundant operations can be reduced.

### <Fourth Embodiment>

A method for constructing a multimodal UI according to a fourth embodiment of the present invention is described. In this embodiment, a component is converted while considering a synonym. In the following description, an authoring tool for constructing a multimodal UI is used as an example.

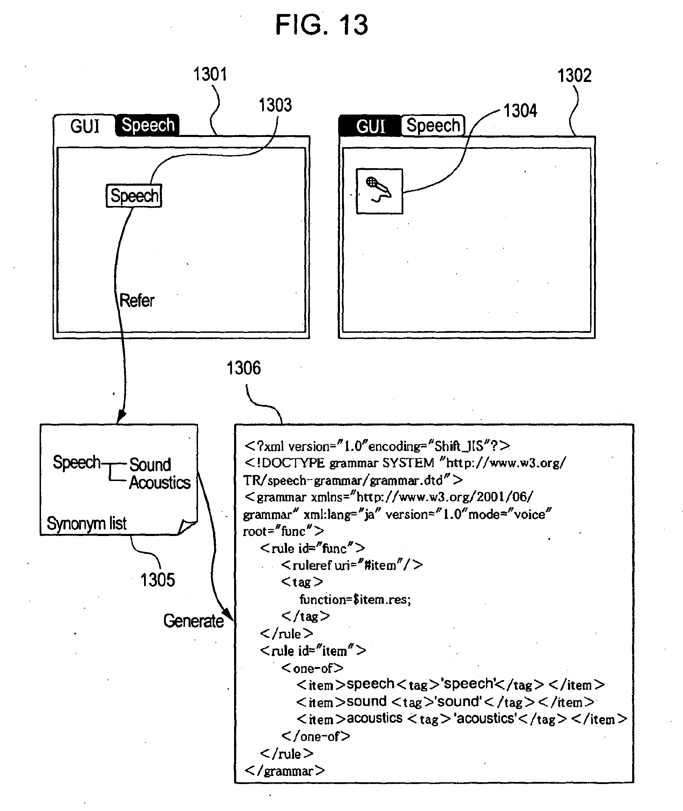

Referring to Fig. 13, a button "Speech" 1303 is placed on a GUI editing screen 1301. By selecting and copying the button 1303 and pasting it on a speech UI editing screen 1302, a speech input component 1304 is generated as described above in the second embodiment. However, this embodiment is different in that a synonym list 1305 stored in the storage unit 102 is referred to when the component to be converted is analyzed (step S1701). When a synonym exists, the synonym is added to the recognition vocabulary. For example, synonyms of "speech", e.g., "sound" and "acoustics", are added to the recognition vocabulary (1306). Accordingly, the speech input component 1304 can accept not only "speech" but also its synonyms "sound" and "acoustics".

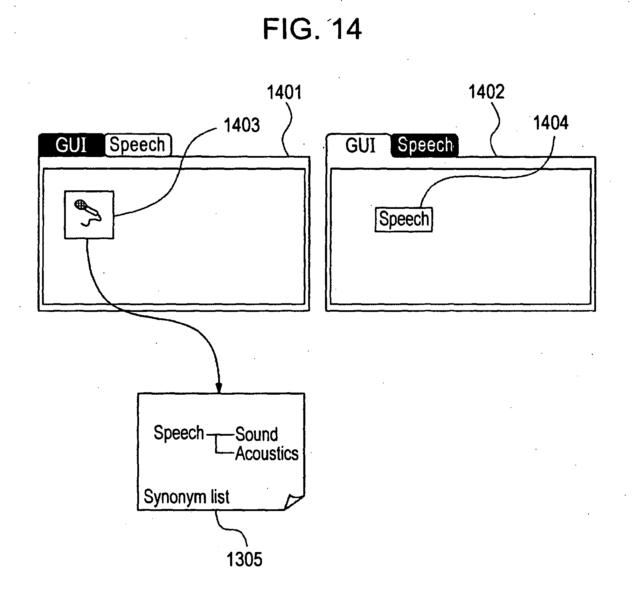

In Fig. 14, a speech input component 1403 is placed on a speech UI editing screen 1401. The speech input component 1403 has the speech recognition grammar 1306. When the speech input component 1403 is selected, copied, and pasted on a GUI editing screen 1402, the synonym list 1305 is referred to during analysis of the component to be converted (step S1701), as in the above-described example. In this case, the recognition vocabulary of the speech recognition grammar 1306 includes synonyms ("speech", "sound", and "acoustics"), so that a term at the top of a synonym tree is selected and the synonyms are combined together. In other words, only "Speech" is extracted as a result of analyzing the speech input component, and a button "Speech" 1404 is placed on the GUI editing screen 1402.

As described above, according to the fourth embodiment, a component is converted while considering synonyms. Therefore, the author need not add a synonym after conversion and redundant operations can be reduced. Furthermore, related terms such as near-synonyms can be applied in addition to synonyms.

In the first to fourth embodiments, conversion of a component relating to GUI edit and speech UI edit has been described. However, the present invention can also be applied to a UI using hand-written character recognition and a UI using gesture recognition.

The present invention can also be carried out by supplying a storage medium storing program code of software realizing the function of the above-described embodiments to a system or an apparatus and by allowing a computer (or CPU or MPU) of the system or the apparatus to read and execute the program code.

In that case, the program code read from the storage medium realizes the function of the above-described embodiments, and thus the storage medium storing the program code constitutes an example of the present invention.

Examples of the storage medium for supplying the program codes include a flexible disk, a hard disk, an optical disk, a magneto-optical disk, a CD-ROM, a CD-R, a magnetic tape, a nonvolatile memory card, and a ROM.

The function of the above-described embodiments can be realized by allowing the computer to execute the read program code. Also, the function of the above-described embodiments can be realized by allowing an operating system (OS) or the like operating in the computer to execute part or all of actual processing based on instructions of the program code.

Further, after the program code read from the storage medium is written in a memory of a function expanding board inserted into the computer or a function expanding unit connected to the computer, a CPU or the like provided in the function expanding board or the function expanding unit can execute part or all of actual processing based on the instructions of the program code. With this processing, the function of the above-described embodiments can be realized.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. A computer implemented method for constructing a user interface with a GUI editing screen and a speech UI editing screen, comprising:
(i) a selecting step of selecting the GUI editing screen or the speech UI editing screen to display on a display unit;
(ii) a receiving step of receiving instructions to convert a GUI component (403, 503) to a speech input component or a speech input component (405, 506, 1003) into a GUI component, the receiving step comprising:
a copying step of copying a GUI component placed on the GUI editing screen or a speech input component on the speech UI editing screen; and
a pasting step of pasting the copied GUI component or the copied speech input component on the GUI editing screen or on the speech UI editing screen;
(iii) a converting step of one of converting the copied GUI component into a speech input component in response to pasting the copied GUI component on the speech UI editing screen and converting the copied speech input component into a GUI component in response to pasting the copied speech input component on the GUI editing screen; and
(iv) a display controlling step of controlling displaying the converted component to which the data converted in the converting step is related
wherein, in the case that the copied component is a GUI component, the method further comprises a generating step of generating a speech recognition grammar (303) based on the data corresponding to the copied GUI component, and
wherein, in the case that the copied component is a speech input component, the converting step comprises analyzing a speech recognition grammar of the speech input component and converting the speech input component into a GUI component based on a result of the analysis.

2. The method according to Claim 1, wherein a description to recognize related vocabulary of the data corresponding to the GUI component is added to the speech recognition grammar.

3. The method according to Claim 1, wherein the speech recognition grammar includes a recognition vocabulary, and wherein synonyms in the recognition vocabulary are combined into one.

4. The method according to Claim 1, wherein, when the GUI component is converted into a speech input component, and the GUI component is represented by first data before such conversion, and the first data is changed after such conversion, it is determined whether the speech input component resulting from such conversion should be updated.

5. The method according to Claim 2, wherein the related vocabulary includes synonyms of the data corresponding to the GUI component.

6. The method according to Claim 2, wherein the related vocabulary includes near synonyms of the data corresponding to the GUI component.

7. The method according to Claim 1, wherein, in the case that the speech component is converted into a GUI input component, and the speech component is represented by first data before such conversion, and the first data is changed after such conversion, it is determined whether the GUI input component resulting from such conversion should be updated.

8. A control program for enabling a computer to execute the method according to Claim 1.

9. A computer-readable storage medium storing the control program according to Claim 8.

10. An apparatus for constructing a user interface, the user interface having a GUI editing screen and a speech UI editing screen, the apparatus comprising:
selecting means for selecting the GUI editing screen or the speech UI editing screen to display on a display unit;
receiving means for receiving instructions to convert a GUI component to a speech input component or a speech input component into a GUI component, the receiving means comprising:
copying means for copying a GUI component placed on the GUI editing screen or a speech input component on the speech UI editing screen; and
pasting means for pasting the copied GUI component or the copied speech input component on the GUI editing screen or on the speech UI editing screen;
converting means for one of converting a copied GUI component into a speech input component in response to pasting the copied GUI component on the speech UI editing screen and converting a copied speech input component into a GUI component in response to pasting the copied speech input component on the GUI editing screen;
generating means operable, in the case that the copied component is a GUI component, to generate a speech recognition grammar based on the data corresponding to the copied GUI component, and
display controlling means for controlling displaying the converted component to which the data converted by the converting means is related,
wherein, in the case that the copied component is a speech input component, the converting means is operable to analyze a speech recognition grammar of the speech input component and to convert the speech input component into a GUI component based on a result of the analysis.

## Patentansprüche

1. Computerimplementiertes Verfahren zum Erstellen einer Benutzeroberfläche mittels eines GUI-Bearbeitungsbildschirms und eines Sprach-UI-Bearbeitungsbildschirms, umfassend:
(i) einen Auswählschritt zum Auswählen des GUI-Bearbeitungsbildschirms oder des Sprach-UI-Bearbeitungsbildschirms zwecks Anzeige auf einer Anzeigeeinheit;
(ii) einen Empfangsschritt zum Empfangen von Instruktionen, eine GUI-Komponente (403, 503) in eine Spracheingabekomponente umzuwandeln oder eine Spracheingabekomponente (405, 506, 1003) in eine GUI-Komponente umzuwandeln, wobei der Empfangsschritt umfasst:
einen Kopierschritt zum Kopieren einer auf dem GUI-Bearbeitungsbildschirm platzierten GUI-Komponente oder einer auf dem Sprach-UI-Bearbeitungsbildschirm befindlichen Spracheingabekomponente; und
einen Einfügeschritt zum Einfügen der kopierten GUI-Komponente oder kopierten Spracheingabekomponente auf dem GUI-Bearbeitungsbildschirm oder dem Sprach-UI-Bearbeitungsbildschirm;
(iii) einen Umwandlungsschritt entweder zum Umwandeln der kopierten GUI-Komponente in eine Spracheingabekomponente, ansprechend auf das Einfügen der kopierten GUI-Komponente auf dem Sprach-UI-Bearbeitungsbildschirm, oder zum Umwandeln der kopierten Spracheingabekomponente in eine GUI-Komponente, ansprechend auf das Einfügen der kopierten Spracheingabekomponente auf dem GUI-Bearbeitungsbildschirm; und
(iv) einen Anzeigesteuerschritt zum Steuern des Anzeigens der umgewandelten Komponente, auf die sich die in dem Umwandlungsschritt umgewandelten Daten beziehen,
wobei für den Fall, dass die kopierte Komponente eine GUI-Komponente ist, das Verfahren außerdem einen Erzeugungsschritt umfasst zum Erzeugen einer Spracherkennungsgrammatik (303) auf Basis der der kopierten GUI-Komponente entsprechenden Daten, und
wobei für den Fall, dass die kopierte Komponente eine Spracheingabekomponente ist, der Umwandlungsschritt das Analysieren einer Spracherkennungsgrammatik der Spracheingabekomponente und das Umwandeln der Spracheingabekomponente in eine GUI-Komponente basierend auf einem Ergebnis der Analyse umfasst.

2. Verfahren nach Anspruch 1, wobei der Spracherkennungsgrammatik eine Beschreibung zum Erkennen von zugehörigem Vokabular der der GUI-Komponente entsprechenden Daten hinzugefügt wird.

3. Verfahren nach Anspruch 1, wobei die Spracherkennungsgrammatik ein Erkennungsvokabular beinhaltet, und wobei Synonyme in dem Erkennungsvokabular zu einem Einzigen kombiniert werden.

4. Verfahren nach Anspruch 1, wobei, wenn die GUI-Komponente in eine Spracheingabekomponente umgewandelt wird, die GUI-Komponente vor einer solchen Umwandlung durch erste Daten repräsentiert wird, und die ersten Daten nach der Umwandlung geändert werden, festgestellt wird, ob die aus einer solchen Umwandlung resultierende Spracheingabekomponente aktualisiert werden sollte.

5. Verfahren nach Anspruch 2, wobei das zugehörige Vokabular Synonyme der der GUI-Komponente entsprechenden Daten beinhaltet.

6. Verfahren nach Anspruch 2, wobei das zugehörige Vokabular nahekommende Synonyme der der GUI-Komponente entsprechenden Daten beinhaltet.

7. Verfahren nach Anspruch 1, wobei für den Fall, dass die Spracheingabekomponente in eine GUI-Eingabekomponente umgewandelt wird, die Spracheingabekomponente vor einer solchen Umwandlung durch erste Daten repräsentiert wird, und die ersten Daten nach der Umwandlung geändert werden, festgestellt wird, ob die aus einer solchen Umwandlung resultierende GUI-Eingabekomponente aktualisiert werden sollte.

8. Steuerprogramm zum Veranlassen eines Computers, das Verfahren nach Anspruch 1 auszuführen.

9. Computerlesbares Speichermedium, welches das Steuerprogramm nach Anspruch 8 gespeichert hat.

10. Vorrichtung zum Erstellen einer Benutzeroberfläche, die einen GUI-Bearbeitungsbildschirm und einen Sprach-UI-Bearbeitungsbildschirm aufweist, umfassend:
eine Auswähleinrichtung zum Auswählen des GUI-Bearbeitungsbildschirms oder des Sprach-UI-Bearbeitungsbildschirms zwecks Anzeige auf einer Anzeigeeinheit;
eine Empfangseinrichtung zum Empfangen von Instruktionen, eine GUI-Komponente in eine Spracheingabekomponente umzuwandeln oder eine Spracheingabekomponente in eine GUI-Komponente umzuwandeln, wobei die Empfangseinrichtung umfasst:
eine Kopiereinrichtung zum Kopieren einer auf dem GUI-Bearbeitungsbildschirm platzierten GUI-Komponente oder einer auf dem Sprach-UI-Bearbeitungsbildschirm befindlichen Spracheingabekomponente; und
eine Einfügeeinrichtung zum Einfügen der kopierten GUI-Komponente oder kopierten Spracheingabekomponente auf dem GUI-Bearbeitungsbildschirm oder dem Sprach-UI-Bearbeitungsbildschirm;
eine Umwandlungseinrichtung entweder zum Umwandeln der kopierten GUI-Komponente in eine Spracheingabekomponente, ansprechend auf das Einfügen der kopierten GUI-Komponente auf dem Sprach-UI-Bearbeitungsbildschirm, oder zum Umwandeln der kopierten Spracheingabekomponente in eine GUI-Komponente, ansprechend auf das Einfügen der kopierten Spracheingabekomponente auf dem GUI-Bearbeitungsbildschirm;
eine Erzeugungseinrichtung, die betreibbar ist für den Fall, dass die kopierte Komponente eine GUI-Komponente ist, zum Erzeugen einer Spracherkennungsgrammatik basierend auf den der kopierten GUI-Komponente entsprechenden Daten, und
eine Anzeige-Steuereinrichtung zum Steuern des Anzeigens der umgewandelten Komponente, auf die sich die von der Umwandlungseinrichtung umgewandelten Daten beziehen,
wobei für den Fall, dass die kopierte Komponente eine Spracheingabekomponente ist, die Umwandlungseinrichtung betreibbar ist zum Analysieren einer Spracherkennungsgrammatik der Spracheingabekomponente und zum Umwandeln der Spracheingabekomponente in eine GUI-Komponente, basierend auf einem Ergebnis der Analyse.

## Revendications

1. Procédé mis en oeuvre sur ordinateur pour construire une interface utilisateur à l'aide d'un écran de modification de GUI (interface utilisateur graphique) et d'un écran de modification d'UI (interface utilisateur) vocale, comprenant :
(i) une étape de sélection consistant à sélectionner l'écran de modification de GUI ou l'écran de modification d'UI vocale devant être affiché sur une unité d'affichage ;
(ii) une étape de réception consistant à recevoir des instructions destinées à convertir un composant de GUI (403, 503) en un composant d'entrée vocale, ou un composant d'entrée vocale (405, 506, 1003) en un composant de GUI, l'étape de réception comprenant :
une étape de copie consistant à copier un composant de GUI placé sur l'écran de modification de GUI ou un composant d'entrée vocale sur l'écran de modification d'UI vocale ; et
une étape de collage consistant à coller le composant de GUI copié ou le composant d'entrée vocale copié sur l'écran de modification de GUI ou sur l'écran de modification d'UI vocale,
(iii) une étape de conversion consistant soit à convertir le composant de GUI copié en un composant d'entrée vocale en réponse au fait de coller le composant de GUI copié sur l'écran de modification d'UI vocale soit à convertir le composant d'entrée vocale copié en un composant de GUI en réponse au fait de coller le composant d'entrée vocale copié sur l'écran de modification de GUI ; et
(iv) une étape de commande d'affichage consistant à commander l'affichage du composant converti auquel les données converties sont liées lors de l'étape de conversion,
dans lequel, lorsque le composant copié est un composant de GUI, le procédé comprend en outre une étape de génération consistant à générer une grammaire de reconnaissance vocale (303) sur la base des données correspondant au composant de GUI copié, et
dans lequel, lorsque le composant copié est un composant d'entrée vocale, l'étape de conversion consiste à analyser une grammaire de reconnaissance vocale du composant d'entrée vocale et à convertir le composant d'entrée vocale en un composant de GUI sur la base d'un résultat de l'analyse.

2. Procédé selon la revendication 1, dans lequel une description permettant de reconnaître un vocabulaire lié dans les données correspondant au composant de GUI est ajoutée à la grammaire de reconnaissance vocale.

3. Procédé selon la revendication 1, dans lequel la grammaire de reconnaissance vocale comprend un vocabulaire de reconnaissance et dans lequel des synonymes contenus dans le vocabulaire de reconnaissance sont combinés en un seul élément.

4. Procédé selon la revendication 1, dans lequel, lorsque le composant de GUI est converti en un composant d'entrée vocale, lorsque le composant de GUI est représenté par des premières données avant cette conversion, et lorsque les premières données sont transformées après cette conversion, il est déterminé si le composant d'entrée vocale résultant de cette conversion doit être mis à jour.

5. Procédé selon la revendication 2, dans lequel le vocabulaire lié comprend des synonymes des données correspondant au composant de GUI.

6. Procédé selon la revendication 2, dans lequel le vocabulaire lié comprend des synonymes proches des données correspondant au composant de GUI.

7. Procédé selon la revendication 1, dans lequel, lorsque le composant vocal est converti en un composant d'entrée de GUI, lorsque le composant vocal est représenté par des premières données avant cette conversion, et lorsque les premières données sont transformées après cette conversion, il est déterminé si le composant d'entrée de GUI résultant de cette conversion doit être mis à jour.

8. Programme de commande destiné à permettre à un ordinateur d'exécuter le procédé de la revendication 1.

9. Support de stockage lisible par ordinateur stockant le programme de commande de la revendication 8.

10. Appareil destiné à construire une interface utilisateur, l'interface utilisateur ayant un écran de modification de GUI et un écran de modification d'UI vocale, l'appareil comprenant :
un moyen de sélection pour sélectionner l'écran de modification de GUI ou l'écran de modification d'UI vocale devant être affiché sur une unité d'affichage ;
un moyen de réception pour recevoir des instructions destinées à convertir un composant de GUI en un composant d'entrée vocale ou un composant d'entrée vocale en un composant de GUI, le moyen de réception comprenant :
un moyen de copie pour copier un composant de GUI placé sur l'écran de modification de GUI ou un écran d'entrée vocale sur l'écran de modification d'UI vocale; et
un moyen de collage pour coller le composant de GUI copié ou le composant d'entrée vocale copié sur l'écran de modification de GUI ou sur l'écran de modification d'UI vocale ;
un moyen de conversion soit pour convertir un composant de GUI copié en un composant d'entrée vocale en réponse au collage du composant de GUI copié sur l'écran de modification d'UI vocale, soit pour convertir un composant d'entrée vocale copié en un composant de GUI en réponse au collage du composant d'entrée vocale copié sur l'écran de modification de GUI ;
un moyen générateur ayant pour fonction, lorsque le composant copié est un composant de GUI, de générer une grammaire de reconnaissance vocale sur la base de données correspondant au composant de GUI copié, et
un moyen de commande d'affichage pour commander l'affichage du composant converti auquel les données converties par le moyen de conversion sont liées,
dans lequel, lorsque le composant copié est un composant d'entrée vocale, le moyen de conversion a pour fonction d'analyser une grammaire de reconnaissance vocale du composant d'entrée vocale et de convertir le composant d'entrée vocale en un composant de GUI sur la base d'un résultat de l'analyse.
